# EUROPÄISCHE PATENTSCHRIFT

(11) **EP 0 973 306 B1**
(45) Veröffentlichungstag und Bekanntmachung des Hinweises auf die Patenterteilung: **01.03.2006**
(21) Anmeldenummer: 99108995.4
(22) Anmeldetag: 06.05.1999
(51) Int. Cl.: H04L 27/26, H04L 25/03

(54) **Verfahren zum linearen Vorverzerren eines Multiträgerssignals**
Method of linear predistortion of a multicarrier signal
Procédé de prédistorsion linéaire d'un signal à porteuses multiples

(30) Priorität: 17.07.1998 DE 19832116
(43) Veröffentlichungstag der Anmeldung: 19.01.2000
(73) Patentinhaber: ROBERT BOSCH GMBH, 70442 Stuttgart (DE)
(72) Erfinder: Hovestadt, Guido, 31139 Hildesheim (DE); Kussmann, Holger, 31141 Hildesheim (DE)

(56) Entgegenhaltungen:
- EP-A- 0 725 508
- EP-A- 0 813 300
- CACOPARDI S ET AL: "COMBINED OFDM-CDMA CONFIGURATION FOR MULTIMEDIA WIRELESS APPLICATIONS" IEEE TRANSACTIONS ON CONSUMER ELECTRONICS, IEEE INC. NEW YORK, US, Bd. 42, Nr. 4, 1. November 1996 (1996-11-01), Seiten 865-873, XP000688702 ISSN: 0098-3063

## Beschreibung

### Stand der Technik

Die Erfindung betrifft ein Verfahren zum linearen Vorverzerren eines digitalisierten Signals, das mit Hilfe eines Mulüträgerverfahrens übertragen werden soll, wobei die bei dem Multiträgerverfahren verwendeten, das Trägerspektrum bildenden Trägerfrequenzen mit Korrekturwerten beaufschlagt werden.

Zur Übertragung von digitalisierten Videosignalen über ein terrestrisches Sendernetz (Digital Video Broadcasting - terrestrical = DVB-T) wird ein Multiträgerverfahren mit kohärenter Modulation der einzelnen Trägerfrequenzen des Trägerspektrums (Orthogonal Frequency Division Multiplex - OFDM) verwendet Um eine gute Signalübertragung zu gewährleisten, wird die digitale Signalverarbeitung bei der Implementierung des DVB-Modulators so ausgelegt, daß das mit dem digitalisierten Videosignal modulierte Multiträgersignal (OFDM-Signal) möglichst unverfälscht auf die Antenne geführt wird. Dies erweist sich in der Praxis als problematisch, da sowohl äußere Restriktionen, wie z.B. Bandbegrenzung und einzuhaltender Schulterabstand, als auch die für die Übertragung erforderliche Vorverarbeitung des Videosignals und die Senderröhre selbst zu linearen und nicht linearen Veränderungen des Signals führen. Die linearen Verzerrungen werden im wesentlichen verursacht durch den Digital/Analog(D/A)-Wandler und die damit verbundene Aperturfunktion, eingesetzte digitale Filter zur Erzeugung der ersten Zwischenfrequenz und die Ausgangsfilter nach der D/A-Wandlung und nach der Leistungsverstärkung, welche zur Bandbegrenzung und Einhaltung der Spektrumsmasken dienen. Auch wenn bei allen vorgenannten Komponenten auf eine möglichst lineare Übertragungsfunktion geachtet wird, verbleibt eine Amplitudenverzerrung, die insbesondere bei höherwertiger Modulation der Träger einen bedeutenden Performanceverlust bewirken kann.

Bei der voranstehend beschriebenen Übertragung von digitalisierten Videosignalen mit Hilfe eines Multiträgerverfahrens liegt das Signal vor der IFFT praktisch im Frequenzbereich vor. In diesem Falle kann eine Kompensation der linearen Verzerrungen des Signals durch Vorverzerren der Trägerfrequenzen realisiert werden. Dementsprechend sieht ein bekanntes Verfahren zum linearen Vorverzerren eines digitalisierten Signals vor, jede einzelne Trägerfrequenz mit einem individuell bestimmten und abgespeicherten Korrekturwert zu multiplizieren. Im Falle der Übertragung der digitalisierten Videosignale nach DVB-T müssen dazu je nach Mode, d.h. je nach Anzahl der verwendeten Trägerfrequenzen, 6817 oder 1705 Korrekturwerte ermittelt, gespeichert und bei einer Abtastrate des Signals von 9,14 MHz multipliziert werden. Schon die Bestimmung einer so großen Anzahl von Korrekturwerten ist relativ aufwendig und wenig benutzerfreundlich. Daneben ist auch die Durchführung der Vorverzerrung, nämlich die Multiplikation der einzelnen Trägerfrequenzen, mit zusätzlichem Soft- und Hardwareaufwand verbunden.

Aus CACOPARDI et al: Combined OFDM-CDMA configuration for multimedia wireless applications, IEEE Transactions on Consumer Electronics, Band 42 Nr. 4 01.11.1996, Seiten 865 - 873 ist es bekannt eine Vorverzerrung bei einem OFDM-CDMA System vorzusehen. Die Vorverzerrungsgewichte werden in der Basisstation ermittelt und dann zu einer Mobilstation übertragen. Die Mobilstationen wenden dann die Vorverzerrung an.

### Vorteile der Erfindung

Um nun die verarbeitungsbedingten Verzerrungen des Signals möglichst gut zu kompensieren, so daß die Implementierungsverluste möglichst gering sind und eine möglichst große Systemleistung erzielt wird, und um außerdem den durch die Kompensation bedingten Zusatzaufwand und die damit verbundenen Kosten so gering wie möglich zu halten, wird erfindungsgemäß vorgeschlagen, die Trägerfrequenzen in Gruppen zusammenzufassen und jeweils alle Trägerfrequenzen einer Gruppe mit einem vorbestimmten Korrekturwert zu beaufschlagen.

Im Gegensatz zu dem aus der Praxis bekannten Verfahren zum linearen Vorverzerren wird erfindungsgemäß also nicht jede einzelne Trägerfrequenz indmduell gewichtet; die Trägerfrequenzen werden hier vielmehr gruppenweise mit einem Korrekturwert beaufschlagt, so daß die Anzahl der zu bestimmenden und abzuspeichemden Korrekturwerte im Vergleich zu dem bekannten Verfahren erheblich reduziert werden kann. Sowohl die Gruppengräße, d.h. die Anzahl der Trägerfrequenzen, die in einer Gruppe zusammengefaßt sind, als auch die Lokalisierung der Gruppen innerhalb des Trägerspektrums können erfindungsgemäß beliebig gewählt werden. Auf diese Weise lassen sich die im Trägerspektrum ungleichmäßig auftretenden, systembedingten linearen Verzerrungen trotz Reduzierung der Anzahl der zu bestimmenden und abzuspeichemden Korrekturwerte sehr gut kompensieren, da die Auswirkungen der linearen Verzerrungen auf das Signal bekannt sind.

So läßt sich im Rahmen des erfindungsgemäßen Verfahrens in vorteilhafter Weise die Anzahl der in einer Gruppe zusammengefaßten Trägerfrequenzen in Abhängigkeit von der Lage der jeweiligen Trägerfrequenzen im Trägerspektrum und der in diesem Frequenzbereich zu erwartenden Verzerrung des Signals wählen. Erfahrungsgemäß sind die linearen Verzerrungen des Signals in den Randbereichen des Trägerspektrums erheblich größer als im Mittelbereich des Trägerspektrums. Dementsprechend empfiehlt es sich, die Anzahl der in einer Gruppe zusammengefaßten Trägerfrequenzen in den Randbereichen des Trägerspektrums kleiner zu wählen als im Mittelbereich des Trägerspektrums. Auf diese Weise können die von der Verzerrung am stärksten betroffenen Trägerfrequenzen im Randbereich des Trägerspektrums differenzierter und auch stärker gewichtet werden als die Trägerfrequenzen im Mittelbereich, ohne daß dazu die Anzahl der zu bestimmenden Korrekturwerte erhöht werden müßte.

Im Hinblick auf eine möglichst einfache Hardwarerealisierung bzw. Implementierung ist es von Vorteil, das erfindungsgemäße Verfahren in Verbindung mit dem Mapping durchzuführen. In der Regel wird das digitalisierte Signal für die Übertragung in einen zweidimensionalen Signalraum abgebildet. Diese Abbildung wird allgemein als "Mapping" bezeichnet. Dabei wird das digitalisierte Signal als Folge von Bitpaketen gleicher Größe betrachtet, denen in Abhängigkeit von der jeweils vorliegenden Bitfolge eine bestimmte komplexe Zahl zugeordnet wird. Da dabei außerdem ohne Zusatzaufwand auch noch die zu jedem Bitpaket zugehörige Trägerfrequenz ermittelt wird, kann bereits bei der Abbildung der Bitpakete in den zweidimensionalen Signalraum der für die jeweilige Trägerfrequenz bestimmte Korrekturwert berücksichtigt werden. Dies kann beispielsweise dadurch geschehen, daß jedem Bitpaket zunächst eine komplexe Zahl zugeordnet wird, die dann mit dem für die Trägerfrequenz des entsprechenden Bitpakets bestimmten Korrekturwert multipliziert wird, oder auch dadurch, daß die Ergebnisse der Abbildung der Bitpakete in den zweidimensionalen Signalraum aus einer Look-Up-Tabelle ausgelesen werden, in der alle aufgrund der Länge der Bitpakete und der vorbestimmten Korrekturwerte möglichen Abbildungswerte abgelegt sind. In beiden Fällen ist die lineare Vorverzerrung des Signals aufgrund der Kombination mit dem ohnehin notwendigen Mapping nur mit einem relativ geringen Zusatzaufwand verbunden.

Schließlich sei noch darauf hingewiesen, daß sich das erfindungsgemäße Verfahren zwar grundsätzlich zum linearen Vorverzerren von digitalisierten Signalen aller Art eignet, aber insbesondere zur digitalen Videoübertragung über ein terrestrisches Sendemetz vorteilhaft ist, wo große Datenmengen übertragen werden müssen.

### Zeichnungen

- Fig. 1a: zeigt das Spektrum eines OFDM-Signals im idealen und im realen -also verzerrten - Fall sowie eine Kurve von Korrekturfaktoren zur Kompensation der bei der digitalen Signalverarbeitung auftretenden Verzerrungen.
- Fig. 1b: zeigt eine Aufteilung des in Fig. 1a dargestellten Spektrums in Sektoren, denen entsprechend dem erfindungsgemäßen Verfahren jeweils eine Gruppe von Trägerfrequenzen zugeordnet ist.
- Fig. 2: zeigt das Blockschaltbild einer Signalverarbeitung, bei der die erfindungsgemäße Vorverzerrung eines digitalisierten Signals in Verbindung mit dem Mapping dieses Signals durchgeführt wird.

### Figurenbeschreibung

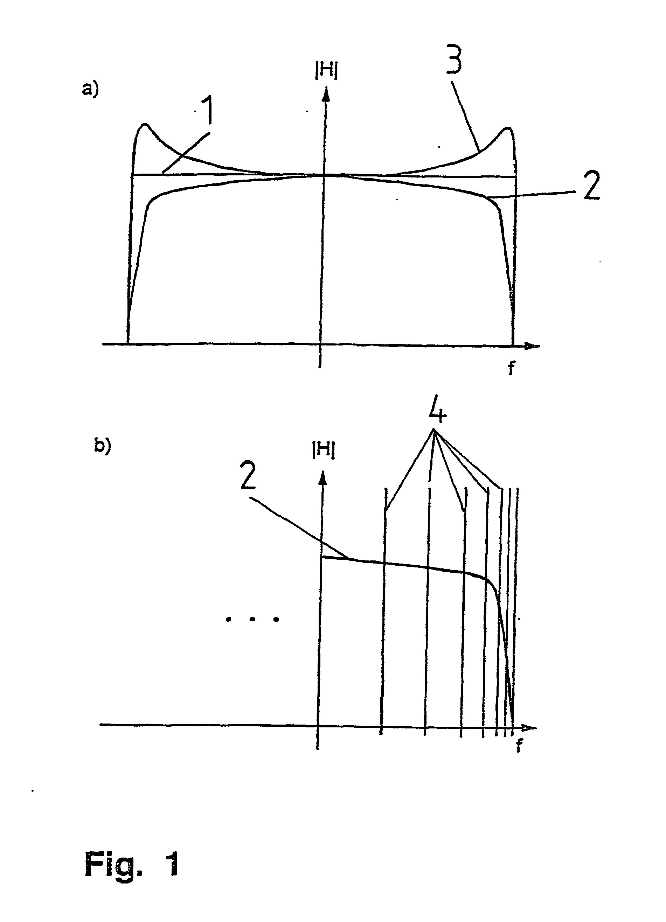

Wie bereits erwähnt, zeigt Fig. 1a das Spektrum eines OFDM-Signals im idealisierten Fall, der mit 1 bezeichnet ist, und ein reales Beispiel, das mit 2 bezeichnet ist. Im realen Fall führen die einzelnen Komponenten der digitalen Signalverarbeitung, wie z.B. der D/A-Wandler und verschiedene Filter, zu linearen Verzerrungen des Signals, die sich besonders stark auf die Randbereiche des Trägerspektrums auswirken. Diese Verzerrungen können nun durch Multiplikation der einzelnen Trägerfrequenzen mit einem geeigneten Korrekturwert kompensiert werden. In Fig. 1a ist mit 3 eine Korrekturkurve bezeichnet, die dem idealen Spektrum 1 und dem realen Spektrum 2 überlagert ist, so daß sich der Korrekturkurve 3 für jeden Frequenzbereich bzw. für jede Trägerfrequenz des realen Spektrums 2 einfach geeignete Korrekturwerte entnehmen lassen. Mit Hilfe der Korrekturwerte dieser Korrekturkurve 3 lassen sich die einzelnen Trägerfrequenzen bzw. Frequenzbereiche des Spektrums ungefähr in dem Maße verstärken, wie das Signal in diesen Frequenzbereichen durch die systembedingten Verzerrungen abgeschwächt wird.

In Fig. 1b sind die Grenzen 4 einer Unterteilung des Trägerspektrums 2 in Sektoren bzw. Gruppen von Trägerfrequenzen dargestellt Entsprechend dem erfindungsgemäßen Verfahren wird die lineare Vorverzerrung des digitalisierten Signals dadurch realisiert, daß alle Trägerfrequenzen einer Gruppe mit einem vorbestimmten Korrekturwert beaufschlagt werden. Im hier dargestellten Ausführungsbeispiel wurde das Trägerspektrum 2 in Sektoren bzw. Gruppen unterschiedlicher Größe aufgeteilt, da sich die Verzerrung auch unterschiedlich stark auf die verschiedenen Frequenzbereiche des Trägerspektrums 2 auswirkt. So ist der Verlauf der Übertragungsfunktion im mittleren Bereich des Trägerspektrums 2 im Vergleich zu den Randbereichen relativ flach. Deshalb umfassen die Gruppen im mittleren Bereich des Trägerspektrums 2 eine erheblich größere Anzahl an Trägerfrequenzen als die Gruppen in den Randbereichen des Trägerspektrums 2. Die Randbereiche des Trägerspektrums 2 werden also in eine größere Anzahl von kleineren Gruppen aufgeteilt, so daß die dort verstärkt auftretenden Verzerrungen differenzierter und damit effektiver kompensiert werden können. In der Praxis hat sich gezeigt, daß eine Aufteilung des Trägerspektrums 2 bzw. der Trägerfrequenzen in 64 oder 128 Sektoren bzw. Gruppen in der Regel ausreicht, um eine effiziente Vorverzerrung zu realisieren.

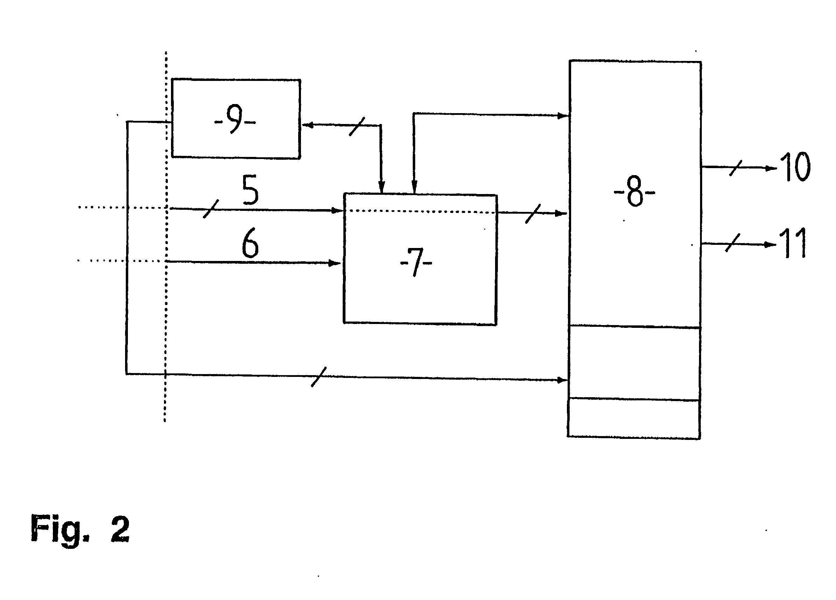

Im Falle des in Fig. 2 dargestellten Blockschaltbildes wird eine solche Vorverzerrung in Kombination mit der Abbildung des zu übertragenden digitalisierten Signals in einen zweidimensinalen Signalraum, dem sog. Mapping, durchgeführt. Das zu übertragende Signal 5 wird zusammen mit einem Synchronisierungssignal 6 einer Steuerlogik 7 zugeführt, so daß diese das Signal 5 als Abfolge von hier 6-Bit-Datenpaketen erkennt. Das Signal 5 könnte genauso gut auch als Abfolge von 2- oder 4-Bit-Datenpaketen behandelt werden. Beim Mapping wird nun jedem dieser Bitpakete eine komplexe Zahl zugeordnet, die die Bitfolge des Bitpakets repräsentiert. D.h. Bitpaketen mit identischer Bitfolge werden auch identische komplexe Zahlen zugeordnet Diese Zuordnung erfolgt hier mit Hilfe einer in einem Mappingspeicher 8 abgespeicherten Look-Up-Tabelle, auf die die Steuerlogik 7 zugreift. Die Art der Look-Up-Tabelle hängt von der Größe der Bitpakete des Signals 5 ab, also von der Modulationsform.

Im hier dargestellten Ausführungsbeispiel erkennt die Steuerlogik 7 nicht nur die Bitfolge eines ihr zugeleiteten Bitpakets, sondern ordnet diesem Bitpaket auch eine bestimmte Trägerfrequenz in Form einer Trägemummer zu. Diese Trägernummer wird dann einem als Sektorauswahl 9 bezeichneten Baustein zugeleitet, der anhand der Trägemummer den Sektor des Trägerspektrums, d.h. die Gruppe von Trägerfrequenzen, auswählt, dem bzw. der die Trägerfrequenz zuzurechnen ist. Die entsprechende Sektorenkennung wird dem Mappingspeicher 8 zugeleitet.

Im hier dargestellten Falle ist im Mappingspeicher 8 nicht nur eine Tabelle abgelegt mit allen aufgrund des voranstehend erläuterten Mappings möglichen komplexen Zahlen als möglichen Abbildungswerten, sondern es ist für jeden Sektor des Trägerspektrums eine eigene Tabelle mit Abbildungswerten abgespeichert, bei denen bereits der für den jeweiligen Sektor bestimmte Korrekturwert berücksichtigt ist. Jede dieser Tabellen umfaßt also Abbildungswerte in Form der durch Mapping ermittelten und mit einem bestimmten Korrekturwert multiplizierten komplexen Zahlen. Mit Hilfe der Steuerlogik 7, die die Bitfolge eines Bitpakets erkennt und dessen Trägemummer bestimmt, und mit Hilfe der Sektorauswahl 9, die die zugehörige Sektorenkennung ermittelt, kann nun also eine bereits korrigierte komplexe Zahl aus dem Mappingspeicher 8 ausgelesen werden. Im hier dargestellten Ausführungsbeispiel erhält man als Ausgangswerte den Realteil 10 und den Imaginärteil 11 der Signalraumdarstellung in 12 Bit-Auflösung.

Im voranstehend beschriebenen Ausführungsbeispiel wird die erfindungsgemäße lineare Vorverzerrung in Kombination mit dem Mapping realisiert, wobei sich der zusätzliche Hardwareaufwand hier auf einen Zusatzspeicher beschränkt. Die Größe dieses Speichers ist abhängig von der Anzahl der Sektoren bzw. Gruppen von Trägerfrequenzen. Im einfachsten Fall wird der Mappingspeicher in Form eines Festwertspeichers, z.B. mit einem EPROM, realisiert, in dem die voreingestellten Mappingwerte für alle Modes abgelegt werden. Eine weitere Möglichkeit ist die Realisierung mit SRAM, die eine adaptive Anpassung der Mappingdaten und auch Korrekturdaten während des Betriebs erlaubt. Über die Adressierung, die z.B. in einem EPLD erzeugt wird, werden die Sektoren und die abzubildenden Symbole ausgewählt. Die Verteilung der Sektoren innerhalb des Spektrums, d.h. die Grenzen, werden in einem Bereichsauswahlspeicher abgelegt, der mit der Trägemummer adressiert wird und dann die Sektomummer am Ausgang zur Verfügung stellt. Im Beispiel von 128 Sektoren ergeben sich 7 Bit für den Ausgang der Sektorauswahl , welche zur Adressierung des Festwertspeichers und damit zur Tabellenauswahl verwendet werden. Dazu kommen bei einer 64 QAM 6 Bit Daten und zusätzliche Bits zur Unterscheidung des eingestellten Modes, insbesondere der Modulationsform.

Abschließend sei nochmals darauf hingewiesen, daß der Vorteil des erfindungsgemäßen Verfahrens in der wahlfreien Aufteilung der OFDM-Unterträger in Bereiche bzw. Sektoren liegt, die jeweils mit einem einzigen vorbestimmten Korrekturwert vorverzerrt werden. Erfindungsgemäß ist nämlich erkannt worden, daß für eine effektive Vorverzerrung nicht unbedingt jede Trägerfrequenz einzeln korrigiert werden muß. Würde man jeden Träger einzeln korrigieren und eine Look-Up-Tabelle verwenden, so bräuchte man schon alleine 13 Bit nur um die Träger zu adressieren. Mit den darüber hinaus notwendigen Adress-Bits wäre ein Mehrfaches an Speicher als nach dem voranstehend beschriebenen Verfahren notwendig. Durch die beliebige Anordnung der Sektoren können gezielt besonders kritische Bereiche im Spektrum mit höherer Auflösung berücksichtigt werden.

## Patentansprüche

1. Verfahren zum linearen Vorverzerren eines digitalisierten Signals, das mit Hilfe eines Multiträgerverfahrens übertragen werden soll, wobei die bei dem Multiträgerverfahren verwendeten, das Trägerspektrum (2) bildenden Trägerfrequenzen mit Korrekturwerten zur Vorverzerrung beaufschlagt werden, **dadurch gekennzeichnet, dass** die Trägerfrequenzen in Gruppen zusammengefasst werden und jeweils alle Trägerfrequenzen einer Gruppe mit einem vorbestimmten Korrekturwert beaufschlagt werden.

2. Verfahren nach Anspruch 1, **dadurch gekennzeichnet, dass** die Anzahl der in einer Gruppe zusammengefassten Trägerfrequenzen in Abhängigkeit von der Lage der jeweiligen Trägerfrequenzen im Trägerspektrum (2) und der in diesem Frequenzbereich zu erwartenden Verzerrung des Signals gewählt wird.

3. Verfahren nach einem der Ansprüche 1 oder 2, **dadurch gekennzeichnet, dass** die Anzahl der in einer Gruppe zusammengefassten Trägerfrequenzen in den Randbereichen des Trägerspektrums (2) kleiner ist als im Mittelbereich des Trägerspektrums (2).

4. Verfahren nach einem der Ansprüche 1 bis 3, wobei das digitalisierte Signal für die Übertragung in einen zweidimensionalen Signalraum abgebildet wird, indem jedem der aufeinanderfolgenden Bitpakete des digitalisierten Signals in Abhängigkeit von seiner Bitfolge eine bestimmte komplexe Zahl zugeordnet wird, **dadurch gekennzeichnet, dass** für jedes Bitpaket die zugehörige Trägerfrequenz ermittelt wird und dass der für diese Trägerfrequenz bestimmte Korrekturwert bei der Abbildung des Bitpakets in den zweidimensionalen Signalraum berücksichtigt wird.

5. Verfahren nach Anspruch 4, **dadurch gekennzeichnet, dass** jedem Bitpaket zunächst eine komplexe Zahl zugeordnet wird, die dann mit dem für die Trägerfrequenz des entsprechenden Bitpakets bestimmten Korrekturwert multipliziert wird.

6. Verfahren nach Anspruch 4, **dadurch gekennzeichnet, dass** die Ergebnisse der Abbildung der Bitpakete in den zweidimensionalen Signalraum aus einer Loopup-Tabelle ausgelesen werden, in der alle aufgrund der Länge der Bitpakete und der vorbestimmten Korrekturwerte möglich Abbildungswerte abgelegt sind.

7. Verwendung eines Verfahrens entsprechend einem der Ansprüche 1 bis 6 zur digitalen Videoübertragung über ein terrestrisches Sendernetz.

## Claims

1. Method for linear predistortion of a digitized signal which is intended to be transmitted using a multicarrier method, in which case correction values for predistortion are applied to the carrier frequencies which are used for the multicarrier method and form the carrier spectrum (2), **characterized in that** the carrier frequencies are combined into groups, and a predetermined correction value is in each case applied to all of the carrier frequencies in one group.

2. Method according to Claim 1, **characterized in that** the number of carrier frequencies which are combined in a group is selected as a function of the position of the respective carrier frequencies in the carrier spectrum (2) and of the signal distortion to be expected in this frequency range.

3. Method according to one of Claims 1 or 2, **characterized in that** the number of carrier frequencies which are combined in one group is less in the edge areas of the carrier spectrum (2) than in the central area of the carrier spectrum (2).

4. Method according to one of Claims 1 to 3, in which the digitized signal is mapped onto a two-dimensional signal space for transmission by allocating a specific complex number to each of the successive bit packets of the digitized signal as a function of its bit sequence, **characterized in that** the associated carrier frequency for each bit packet is determined, and **in that** the correction value which is determined for this carrier frequency is taken into account in the mapping of the bit packet onto the two-dimensional signal space.

5. Method according to Claim 4, **characterized in that** each bit packet is first of all allocated a complex number, which is then multiplied by the correction value determined for the carrier frequency of the corresponding bit packet.

6. Method according to Claim 4, **characterized in that** the results of the mapping of the bit packets onto the two-dimensional signal space are read from a look-up table in which all of the mapping values which are possible on the basis of the length of the bit packets and of the predetermined correction values are stored.

7. Use of a method according to one of Claims 1 to 6 for digital video transmission via a terrestrial transmitter network.

## Revendications

1. Procédé de prédistorsion linéaire d'un signal numérisé devant être transmis à l'aide d'un procédé à porteuses multiples, les fréquences porteuses utilisées dans le procédé à porteuses multiples, formant le spectre porteur (2), étant atteintes avec des valeurs de correction pour la prédistorsion,
**caractérisé en ce que**
les fréquences porteuses sont rassemblées en groupes et toutes les fréquences porteuses respectives d'un groupe sont atteintes avec une valeur de correction prédéterminée.

2. Procédé selon la revendication 1,
**caractérisé en ce que**
le nombre de fréquences porteuses rassemblées dans un groupe est sélectionné en fonction de la position des fréquences porteuses respectives dans le spectre porteur (2) et de la distorsion attendue du signal dans cette plage de fréquence.

3. Procédé selon la revendication 1 ou 2,
**caractérisé en ce que**
le nombre de fréquences porteuses rassemblées dans un groupe dans les zones périphériques du spectre porteur (2) est inférieur à celui de la zone médiane du spectre porteur (2).

4. Procédé selon l'une quelconque des revendications 1 à 3,
**caractérisé en ce que**
le signal numérisé est représenté pour la transmission dans un espace de signaux bidimensionnel,
à chacun des paquets de bits successifs du signal numérisé un nombre complexe donné est associé en fonction de sa séquence de bits,
pour chacun des paquets de bits, la fréquence porteuse correspondante est déterminée, et
la valeur de correction donnée pour cette fréquence porteuse est prise en compte lors de la représentation du paquet de bits dans l'espace de signaux bidimensionnel.

5. Procédé selon la revendication 4,
**caractérisé en ce qu'**
à chaque paquet de bits est tout d'abord associé un nombre complexe qui est ensuite multiplié par la valeur de correction déterminée pour la fréquence porteuse du paquet de bits correspondant.

6. Procédé selon la revendication 4,
**caractérisé en ce que**
les résultats de la représentation des paquets de bits dans l'espace de signaux bidimensionnel sont lus à partir d'un tableau « loopup » dans lequel sont stockées toutes les valeurs de représentation possibles en raison de la longueur des paquets de bits et des valeurs de correction prédéterminées.

7. Utilisation d'un procédé selon l'une quelconque des revendications 1 à 6 pour la transmission vidéo numérique d'un réseau d'émetteurs terrestre.
